Europäisches Patentamt

European Patent Office

Office européen des brevets

(19)

(11) Veröffentlichungsnummer: **0 234 523**
**B1**

(12) # EUROPÄISCHE PATENTSCHRIFT

(45) Veröffentlichungstag der Patentschrift:
29.11.89

(51) Int. Cl.⁴: **E 05 F 15/00**, H 01 H 3/14

(21) Anmeldenummer: **87102432.9**

(22) Anmeldetag: **20.02.87**

(54) **Schliesskanten-Sicherung.**

(30) Priorität: **28.02.86 DE 3606499**

(43) Veröffentlichungstag der Anmeldung:
**02.09.87 Patentblatt 87/36**

(45) Bekanntmachung des Hinweises auf die Patenterteilung:
**29.11.89 Patentblatt 89/48**

(84) Benannte Vertragsstaaten:
**AT BE CH DE ES FR GB IT LI NL SE**

(56) Entgegenhaltungen:
**EP-A- 0 103 726**
**EP-A- 0 172 136**
**FR-A- 2 135 922**
**US-A- 2 437 969**

(73) Patentinhaber: **Haake, Werner, Eschlohn 24,
D-4286 Südlohn (DE)**
Patentinhaber: **Haake, André, Eschlohn 24,
D-4286 Südlohn (DE)**

(72) Erfinder: **Haake, Werner, Eschlohn 24, D-4286 Südlohn
(DE)**
Erfinder: **Haake, André, Eschlohn 24, D-4286 Südlohn
(DE)**

(74) Vertreter: **Habbel, Hans-Georg, Dipl.-Ing.,
Postfach 3429 Am Kanonengraben 11, D-4400 Münster
(DE)**

Anmerkung: Innerhalb von neun Monaten nach der Bekanntmachung des Hinweises auf die Erteilung des europäischen
Patents im Europäischen Patentblatt kann jedermann beim Europäischen Patentamt gegen das erteilte europäische Patent
Einspruch einlegen. Der Einspruch ist schriftlich einzureichen und zu begründen. Er gilt erst als eingelegt, wenn die
Einspruchsgebühr entrichtet worden ist (Art. 99(1) Europäisches Patentübereinkommen).

## Beschreibung

Die Erfindung bezieht sich auf eine Schließkanten-Sicherung mit einer eine elektrische Schalteinrichtung aufweisenden Sicherheitsleiste gemäß dem Oberbegriff des Hauptanspruches.

Eine gattungsbildende Einrichtung wird in der EP-A-0 103 726 beschrieben. Diese bekannte Einrichtung weist stromführende Bolzen mit Kugelenden auf, die in einen isolierenden Kunststoff eingebettet sind, wobei die Bolzenenden über die Kunststoffkörper vorstehen und die Kunststoffkörper in einem elastischen Schlauch angeordnet sind. Diese bekannte Einrichtung bewirkt, daß bei einer erheblichen Durchbiegung dieses schlauchförmigen Bauteiles eine Trennung der Kugelenden durch Abkippen der Kunststoffkörper erfolgt, wobei die Kunststoffkörper eine Isolation bewirken und bei Trennung der stromführenden Bolzen die Stromleitung unterbrochen wird. Die erforderliche Vorspannung zur Kontakthaltung der stromführenden Bolzen wird durch den Schlauch erreicht. Diese bekannte Anordnung hat den Nachteil, daß die erforderliche erhebliche Durchbiegung, um die Trennbewegung der einzelnen Bolzen zu erreichen, bei einer starren Torkante nicht erreicht werden kann, sondern daß ein erheblich großer Einbauraum erforderlich ist. Außerdem ist der für das Trennen der stromführenden Bolzen erforderliche Weg so groß, daß die angestrebte Unfallverhütung nicht erreicht wird, da diese bekannte Einrichtung ein zu spätes Signal erzeugt.

Der Erfindung liegt die Aufgabe zugrunde, die gattungsbildende Schließkanten-Sicherung so zu verbessern, daß ein noch zuverlässigeres Ansprechen der Sicherung erfolgt.

Diese der Erfindung zugrundeliegende Aufgabe wird durch die Lehre des Hauptanspruches gelöst.

Vorteilhafte Ausgestaltungen sind in den Unteransprüchen erläutert.

Durch die erfindungsgemäße Anordnung wird erreicht, daß beim Schließvorgang, beispielsweise eines Tores, ein nicht gewolltes Hindernis zwischen Torkante und Schließkanten-Sicherung bewirkt, daß die Kontaktkette unterbrochen wird, unabhängig an welcher Stelle, in welcher Belastungsbreite und in welcher Richtung die Belastung wirkt. Bei der auftretenden Belastung der Kontaktkette bewirkt nur ein Minimum an Keilwirkung zwischen dem Kontaktelement und dem Isolierring, daß eine Unterbrechung des Ruhestromkreises auftritt, der zu einer Schaltfunktion führt. Nach Entlastung der Kontaktkette tritt eine automatische Ruhestellung zur Schließung des Ruhestromkreises ein. Für die Empfindlichkeit der Ansprechung ist auch die Gradstellung der stirnseitigen Flächen der Endstücke wesentlich.

Ausführungsbeispiele der Erfindung werden nachfolgend anhand der Zeichnungen erläutert. Die Zeichnungen zeigen dabei in:

Fig. 1 eine Ansicht auf eine Sicherheitsleiste teilweise geschnitten, in

Fig. 2 eine stirnseitige Ansicht auf die Sicherheitsleiste, in

Fig. 3 in größerem Maßstab und auseinandergezogen eine Kontaktrolle und eine Isolierkeilwalze, in

Fig. 4 zwei verschiedene Stellungen der Kontaktelemente und in

Fig. 5 in größerem Maßstab eine abgeänderte Ausführungsform der Kontaktelemente.

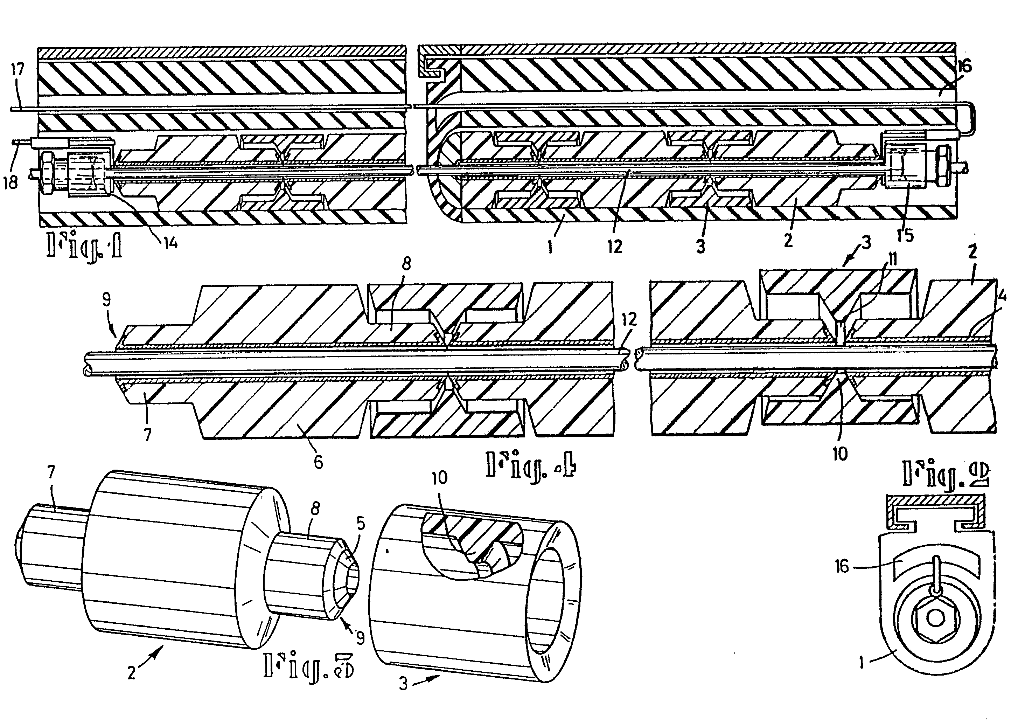

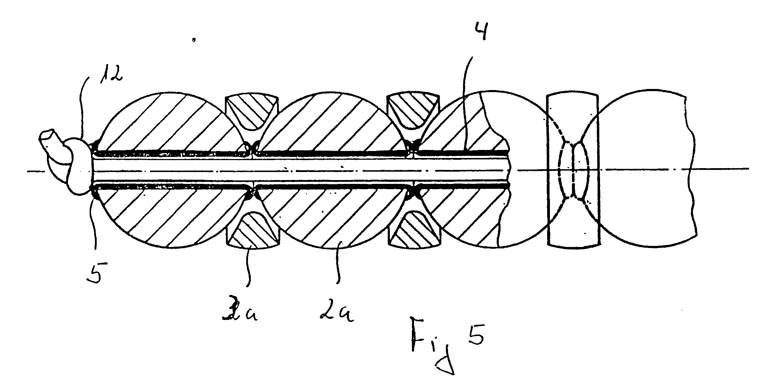

In Fig. 1 ist mit 1 ein Schlauch bezeichnet, in dem eine Vielzahl von Kontaktrollen 2 und Isolierkeilwalzen 3 angeordnet sind. Bei dem dargestellten Ausführungsbeispiel besteht die Kontaktrolle 2 aus isolierendem Kunststoff und ist in ihrem Inneren mit einer aus stromleitendem Werkstoff bestehenden Hülse 4 versehen, die an dem Ende der Kontaktrolle 2 eine Kontaktstelle 5 schaffend übersteht. Die Kontaktrollen 2 bestehen aus einem mittleren Rollenkörper 6 und sich beidseitig an dem mittleren Rollenkörper 6 anschließenden Endstücken 7 und 8, die einen kleineren äußeren Durchmesser aufweisen. Die Endflächen dieser Endstücke 7 und 8 sind keilförmig — wie dies bei 9 erkennbar ist — ausgebildet, wobei diese Keilform zur Achse der Kontaktrolle 2 vorspringend gestaltet ist.

Im Inneren dieser Kontaktrolle 2 ist die beispielsweise aus Kupfer oder Neusilber bestehende Hülse 4 fest angeordnet und an den Stirnenden der Endstücke 7 und 8 so nach außen umgeformt und eingebettet, daß hier eine relativ große Kontaktstelle 5 entsteht, die auch stumpfer als in der Zeichnung dargestellt ausgebildet sein kann.

Die Isolierkeilwalzen 3 sind in ihrem Außendurchmesser dem Außendurchmesser der Kontaktrollen 2 angepaßt und bestehen aus einem im Schnitt gesehen T-förmigen Bauteil, wobei der Steg des T's nach innen vorspringt und als Keilfläche 10 ausgebildet ist, der eine umlaufende innere Stirnkante 11 bildet.

Im Inneren des Hohlraumes der Kontaktrollen 2 und der Isolierkeilwalzen 3 und der Hülse 4 ist eine Expanderschnur 12 angeordnet, die durch die bei 14 und 15 erkennbaren Klemmverschraubungen unter Spannung gesetzt wird, derart, daß die Kontaktstellen der einzelnen Kontaktrollen 2 aneinander anliegen und gleichzeitig dadurch die Isolierkeilwalzen 3 so in dem durch die Endstücke 7 und 8 der Kontaktrollen 2 gebildeten Raum liegen, daß sie den Kontakt der Kontaktstellen 5 der Kontaktrollen 2 ermöglichen.

Erfolgt nunmehr ein Druck auf den Schlauch 1, wird die Isolierkeilwalze 3 so in den Keilraum der Endstücke 7, 8 eingepreßt, daß ein Lösen der Kontaktstellen 5 zweier aneinandergrenzender Kontaktrollen 2 bewirkt wird. Hierbei ist noch nicht einmal eine große Krümmung des Schlauches 1 erforderlich.

In dem Schlauch 1 ist zusätzlich zu dem die Kontaktrollen 2 und die Isolierkeilwalzen 3 aufnehmenden Raum ein Expansionskanal 16 vorgesehen, der eine gute Verformbarkeit des Schlauches garantiert, so daß die in diesen Expansionskanal 16 bei einer Belastung der Isolierkeilwalzen 3 diese ausweichen können.

Gleichzeitig dient der Expansionskanal 16 zur Aufnahme des rückführenden Stromleiters 17, während der hinführende Stromleiter in Fig. 1 bei 18 erkennbar ist und weiterhin durch die stromführenden Hülsen 4 gebildet wird.

Anstelle der Hülsen 4 kann auch so vorgegangen werden, daß die einzelnen Kontaktrollen 2 aus einem stromführenden Kunststoffmaterial gefertigt werden.

Anstelle der in der Zeichnung dargestellten zylindrischen Außenfläche sowohl der Kontaktrollen 2 wie auch der Isolierkeilwalzen 3 können diese auch ballig ausgebildet sein, um derart die Ansprechempfindlichkeit zu erhöhen.

In Fig. 5 ist eine abgeänderte Ausführungsform der Kontaktelemente dargestellt. Hierbei sind Kontaktkugeln 2a vorgesehen und anstelle der Isolierkeilwalzen 3 sind Isolierringe 3a vorgesehen. Die Kontaktkugeln 2a bestehen dabei aus einem Kunststoff und die Hülsen 4. aus einem gut leitenden Werkstoff, z.B. Kupfer, wobei die Hülsen 4 als Nieten ausgebildet sind, die an ihren Enden die Kontaktstellen 5 schaffen.

**Patentansprüche**

1. Schließkanten-Sicherung mit einer, eine elektrische Schalteinrichtung aufweisenden Sicherheitsleiste, die aus einer Vielzahl von Kontaktelementen (2, 2a) besteht, die in einem elastischen Schlauch (1) aneinandergereiht angeordnet sind, wobei die Kontaktelemente in Ruhestellung unter der Einwirkung einer elastischen Vorspannung an stirnseitig vorgesehenen Kontaktstellen (5) aneinander anliegen und unter der Einwirkung einer äußeren Kraft bei Verformen des Schlauches den Kontakt unterbrechend auseinanderbewegt werden, dadurch gekennzeichnet, daß

a) im Inneren der Kontaktelemente (2, 2a) eine Expanderschnur (12) angeordnet ist, die die einzelnen Kontaktelemente (2, 2a) mit ihren Kontaktstellen (5) in axialer Richtung aufeinanderzu zwingt und

b) zwischen den einzelnen Kontaktelementen (2, 2a) Isolierringe (3, 3a) angeordnet sind.

2. Schließkanten-Sicherung nach Anspruch 1, dadurch gekennzeichnet, daß die Kontaktelemente als Kontaktrollen (2) ausgebildet sind und die Isolierringe als Isolierkeilwalzen (3) ausgebildet sind, die mit radial zur Isolierkeilwalzenachse ausgerichteten, in den Innenraum der Isolierkeilwalzen vorspringenden Keilflächen (10) zwischen den einzelnen Kontaktrollen (2) angeordnet sind.

3. Schließkanten-Sicherung nach Anspruch 1, dadurch gekennzeichnet, daß die Kontaktelemente als Kontaktkugeln (2a) ausgebildet sind.

4. Schließkanten-Sicherung wenigstens nach Anspruch 1 und 3, dadurch gekennzeichnet, daß die Isolierringe als Ringkörper (3a) ausgebildet sind.

5. Schließkanten-Sicherung nach Anspruch 1 bis 4, dadurch gekennzeichnet, daß im Inneren der Kontaktelemente (2, 2a) eine aus einem stromleitenden Material gefertigte Hülse (4) angeordnet ist, die an den Enden der Kontaktelemente (2, 2a) die Kontaktstellen (5) schafft.

6. Schließkanten-Sicherung nach Anspruch 1, dadurch gekennzeichnet, daß die Kontaktelemente (2, 2a) aus einem stromleitenden Kunststoff bestehen.

7. Schließkanten-Sicherung wenigstens nach Anspruch 1, dadurch gekennzeichnet, daß die Kontaktelemente (2) und die Isolierkeilwalzen (3) als zylindrische Walzenkörper ausgebildet sind.

8. Schließkanten-Sicherung wenigstens nach Anspruch 1 und 2, dadurch gekennzeichnet, daß die Kontaktrollen (2) und die Isolierkeilwalzen (3) umfangsmäßig gesehen ballig ausgebildet sind.

9. Schließkanten-Sicherung nach einem oder mehreren der vorhergehenden Ansprüche, dadurch gekennzeichnet, daß die Kontaktrollen (2) aus einem mittleren Rollenkörper (6) bestehen, an den sich endseitig in beiden Richtungen vorspringende, einen kleineren Durchmesser aufweisende Endstücke (7, 8) anschließen, deren freie Stirnenden zur Rollenachse hin keilförmig (bei 9) zulaufend ausgebildet sind.

10. Schließkanten-Sicherung nach einem oder mehreren der vorhergehenden Ansprüche, dadurch gekennzeichnet, daß die Isolierringe (3, 3a) den gleichen Außendurchmesser wie die Kontaktelemente (2, 2a) aufweisen und sich in den durch die Endstücke (7, 8) zweier aneinandergrenzender Kontaktelemente (2, 2a) gebildeten Raum einlegen, wobei der Innendurchmesser der aufeinanderzu gerichteten umlaufenden Stirnkante der Keilflächen (10) größer als der Außendurchmesser der an den Stirnenden der Kontaktrollen (2) gebildeten Kontaktstellen (5) ist.

11. Schließkanten-Sicherung nach einem oder mehreren der vorhergehenden Ansprüche, dadurch gekennzeichnet, daß der die Kontaktelemente (2, 2a) und die Isolierringe (3, 3a) aufnehmende Schlauch (1) außer dem zur Aufnahme dieser Elemente bestimmten Hohlraum einen zweiten, als Expansionskanal (16) ausgebildeten Raum aufweist.

12. Schließkanten-Sicherung wenigstens nach Anspruch 11, dadurch gekennzeichnet, daß der Expansionskanal (16) zur Aufnahme des rückführenden Stromleiters (17) dient, während der hinführende Stromleiter (18) an die Kontaktelemente (2, 2a) bzw. die Hülse (4) anschließt.

**Claims**

1. Closing-edge security device with a security strip which comprises an electrical switching arrangement, having a plurality of contact elements (2, 2a) which are arranged in a row one after the other in an elastic flexible tube (1), the contact elements in the condition of rest abutting on one another at contact zones (5) situated at their end faces under the influence of an elastic preload, and being moved away from one another, interrupting contact, when the flexible tube is deformed under the action of an external force, characterised in that

a) in the interior of the contact elements (2, 2a) there is arranged an expander cord (12) which urges the individual contact elements (2, 2a) in the axial direction towards one another with their contact zones (5), and

b) insulating rings (3, 3a) are arranged between the individual contact elements (2, 2a).

2. Closing-edge security device according to claim 1, characterised in that the contact elements are constructed as contact rolls (2) and the insulating rings are constructed as insulating wedge cylinders (3) which are situated, with wedge surfaces (10) directed radially relatively to the insulating wedge cylinder axis and projecting into the interior space of the insulating wedge cylinders, between the individual contact rolls (2).

3. Closing-edge security device according to claim 1, characterised in that the contact elements are constructed as spherical contact elements (2a).

4. Closing-edge security device at least according to claims 1 and 3, characterised in that the insulating rings are constructed as annular elements (3a).

5. Closing-edge security device according to claims 1 to 4, characterised in that in the interior of the contact elements (2, 2a) there is arranged a sleeve (4) which is made from an electrically conductive material, providing the contact zones (5) at the ends of the contact elements (2, 2a).

6. Closing-edge security device according to claim 1, characterised in that the contact elements (2, 2a) are made of an electrically conductive synthetic plastic material.

7. Closing-edge security device at least according to claim 1, characterised in that the contact elements (2) and the insulating wedge cylinders (3) are constructed as cylindrical bodies.

8. Closing-edge security device at least according to claims 1 and 2, characterised in that the contact rolls (2) and the insulating wedge cylinders (3) are given a spherical shape as viewed circumferentially.

9. Closing-edge security device according to one or more of the preceding claims, characterised in that the contact rolls (2) comprise a central roll body (6) which is adjoined at its ends by smaller-diameter end pieces (7, 8) which project in both end directions and whose free end faces are given a wedge form (at 9) tapering towards the roll axis.

10. Closing-edge security device according to one or more of the preceding claims, characterised in that the insulating rings (3, 3a) have the same external diameter as the contact elements (2, 2a) and extend into the space formed by the end pieces (7, 8) of two contact elements (2, 2a) situated adjacent to one another, the inner diameter of the encircling edge face zones of the wedge surfaces (10) directed towards one another being greater than the outer diameter of the contact zones (5) which are formed on the end faces of the contact rolls (2).

11. Closing-edge security device according to one or more of the preceding claims, characterised in that the flexible tube (1) accommodating the contact elements (2, 2a) and the insulating rings (3, 3a) has, in addition to the space intended for receiving these elements, a second space which is formed as an expansion duct (16).

12. Closing-edge security device at least according to claim 11, characterised in that the expansion duct (16) serves to accommodate the electrical return conductor (17), whilst the electrical supply conductor (18) connects with the contact elements (2, 2a) or the sleeve (4).

**Revendications**

1. Dispositif de sécurité pour les bords de fermeture, comprenant un boudin de sécurité présentant un dispositif de commande électrique, lequel est composé d'un grand nombre d'éléments de contact (2, 2a) qui sont disposés bout à bout dans un tuyau élastique (1), les éléments de contact étant en appui les uns contre les autres dans la position de repos, par des zones de contact (5) prévues en position frontale, sous l'action d'une précontrainte élastique, et s'écartant les uns des autres, en interrompant le contact, sous l'action d'une force extérieure, avec déformation du tuyau, caractérisé en ce que

a) à l'intérieur des éléments de contact (2, 2a) est agencé un cordon extensible (12) qui contraint les différents éléments de contact (2, 2a) à s'appliquer les uns contre les autres par leurs zones de contact (5) dans une direction axiale; et

b) des bagues isolantes (3, 3a) sont disposées entre les différents éléments de contact (2, 2a).

2. Dispositif de protection pour les bords de fermeture selon la revendication 1, caractérisé en ce que les éléments de contact sont constitués par des rouleaux de contact (2) et les bagues isolantes par des rouleaux formant coins isolants (3) qui sont interposés entre les différents rouleaux de contact (2) par des surfaces de coins (10), orientées radialement par rapport à l'axe des rouleaux coins isolants et qui font saillie dans la cavité intérieure des rouleaux coins isolants.

3. Dispositif de sécurité pour bords de fermeture selon la revendication 1, caractérisé en ce que les éléments de contact sont constitués par des billes de contact (2a).

4. Dispositif de sécurité pour bords de fermeture selon l'une des revendications 1 et 3, caractérisé en ce que les bagues isolantes sont constituées par des corps annulaires (3a).

5. Dispositif de sécurité pour bords de fermeture selon l'une des revendications 1 à 4, caractérisé en ce qu'à l'intérieur des éléments de contact (2, 2a) est disposé un manchon (4) fait d'une matière conductrice de l'électricité, qui forme les zones de contact (5) des extrémités des éléments de contact (2, 2a).

6. Dispositif de sécurité pour bords de fermeture selon la revendication 1, caractérisé en ce que les éléments de contact (2, 2a) sont faits d'une matière plastique électroconductrice.

7. Dispositif de sécurité pour bords de fermeture, au moins selon la revendication 1, caractérisé en ce que les éléments de contact (2) et les rouleaux coins isolants (3) sont constitués par des corps de rouleaux cylindriques.

8. Dispositif de sécurité pour bords de fermeture, au moins selon les revendications 1 ou 2, caractérisé en ce que les rouleaux de contact (2) et les rouleaux coins isolants (3) sont en forme de tonneau sur leur circonférence.

9. Dispositif de sécurité pour bords de fermeture selon une ou plusieurs des revendications précédentes, caractérisé en ce que les rouleaux de contact (2) sont composés d'un corps de rouleau central (6) auquel se raccordent en bout des embouts (7, 8) qui font saillie dans les deux sens et présentent un plus petit diamètre, et dont les extrémités frontales libres sont d'une configuration qui converge en cône (en 9) en direction de l'axe du rouleau.

10. Dispositif de sécurité pour bords de fermeture selon une ou plusieurs des revendications précédentes, caractérisé en ce que les bagues isolantes (3, 3a) possèdent le même diamètre extérieur que les éléments de contact (2, 2a) et s'engagent dans l'espace délimité par les embouts (7, 8) de deux éléments de contact (2, 2a) adjacents l'un à l'autre, le diamètre intérieur du bord frontal circonférentiel des surfaces de coins (10) qui sont dirigées l'une vers l'autre étant supérieur au diamètre extérieur des zones de contact (5) formées aux extrémités frontales des rouleaux de contact (2).

11. Dispositif de sécurité pour bords de fermeture selon une ou plusieurs des revendications précédentes, caractérisé en ce que le tuyau (1) qui reçoit les éléments de contact (2, 2a) et les bagues isolantes (3, 3a) présente, en dehors de la cavité prévue pour recevoir ces éléments, une deuxième cavité qui forme un canal d'expansion (16).

12. Dispositif de sécurité de bords de fermeture selon au moins la revendication 11, caractérisé en ce que le canal d'expansion (16) sert à recevoir le conducteur électrique de retour (17) tandis que le conducteur électrique d'amenée (18) se ferme sur les éléments de contact (2, 2a) ou sur le manchon (4).

Fig. 1

17  18  14

16

1  12  3  2  15

Fig. 4

9  8  3  11  2  4

7  6  12  10

Fig. 3

7  8  5  9

2  10  3

Fig. 2

16  1

EP 0 234 523 B1

Fig 5